# EUROPÄISCHE PATENTSCHRIFT

(11) **EP 0 402 666 B1**
(45) Veröffentlichungstag und Bekanntmachung des Hinweises auf die Patenterteilung: **27.07.1994**
(21) Anmeldenummer: 90109757.6
(22) Anmeldetag: 22.05.1990
(51) Int. Cl.: B60L 5/20

(54) **Schleifbügel für Stromabnehmer elektrischer Fahrzeuge**
Sliding brush for a current collector of electrical vehicles
Balai frotteur pour prise de courant de véhicules électriques

(30) Priorität: 10.06.1989 DE 3919008
(43) Veröffentlichungstag der Anmeldung: 19.12.1990
(73) Patentinhaber: Ringsdorff-Werke GmbH, 53170 Bonn (DE)
(72) Erfinder: Müller, Hans-Josef, D-5300 Bonn 2 (DE)

(56) Entgegenhaltungen:
- EP-A- 0 078 159

## Beschreibung

Gegenstand der Erfindung ist ein Stromabnehmer elektrischer Fahrzeuge, speziell elektrischer Bahnen mit einem Schleifstück aus Kohlenstoff, das auf einem Träger befestigt ist und dessen Betriebssicherheit durch Druckfluide überwachbar ist.

Schleifbügel für Stromabnehmer bestehen aus einem oder auch aus mehreren Schleifstücken oder Schleifleisten aus Kohlenstoff, die mittels einer Klemmfassung gehalten oder auf einen metallischen Träger gelötet oder geklebt sind. Zur Übertragung elektrischer Ströme zwischen relativ zueinander bewegten Leitern werden die Schleifbügel gegen einen der stromführenden Leiter gedrückt, beispielsweise mit einem Pantographen gegen den Fahrdraht der Oberleitung einer elektrischen Bahn.

Die beim Fahrbetrieb auf die Schleifleiste wirkenden Reibungskräfte und stoßartigen Belastungen verursachen im allgemeinen einen mehr oder weniger langsamen Verschleiß der Schleifleiste, die ersetzt werden muß, bevor ein direkter Kontakt zwischen dem metallischen Träger und dem Fahrdraht entsteht. Um jede Beschädigung des Fahrdrahtes durch den Träger zu verhindern, wird das Schleifstück ausgewechselt, bevor der Fahrdraht in eine kritische Nähe zum Träger kommt, d.h., es wird nicht völlig verbraucht. Andererseits trachten die Benutzer aus betrieblichen und wirtschaftlichen Gründen danach, die Schleifstücke möglichst weit abzufahren. Um sowohl den sicherheitstechnischen als auch betrieblichen wie wirtschaftlichen Belangen beim Betrieb der Schleifbügel optimal Rechnung zu tragen, wurden Vorrichtungen entwickelt, die dem Bedienungspersonal vor dem Erreichen einer kritischen Verschleißgrenze am Schleifstück ein Signal geben und mit deren Erreichen den Schleifbügel automatisch abheben. Derartige Vorrichtungen müssen auch bei Beschädigungen des Schleifstückes, etwa bei dessen Bruch zuverlässig wirken.

Durch das Deutsche Gebrauchsmuster Nr. G 88 03 377.5 wird ein Schleifbügel vorgeschlagen, in dessen Schleifstück im Abstand vom Metallträger wenigstens ein gegen das Schleifstück elektrisch isolierter elektrischer Leiter angeordnet und mit Signalgebern verbunden ist. Mit der Offenlegungsschrift der Europäischen Patentanmeldung Nr. 0 269 307 wurde eine Kontrolleinrichtung für den Schleifbügelverbrauch bekannt, bei der Lichtleiter am oder im Schleifstück angebracht sind. Wenn die Lichtleitfähigkeit durch z.B. Abrieb verringert wird, tritt eine Warneinrichtung in Tätigkeit. Beide beschriebenen Einrichtungen haben den Nachteil, daß z.B. Brüche des Schleifstückes oder diesen vorausgehende Schädigungen, wie Risse, nicht sicher gemeldet werden. Des weiteren sind außen auf den Schleifstücken angebrachte Leiter Beschädigungen durch äußere Einwirkungen, wie z.B. Schlag- und Witterungseinwirkungen mit der Folge von Fehlmeldungen ausgesetzt. Will man diese Nachteile durch Anbringung der Leiter im Inneren der Schleifstücke umgehen, entsteht hoher Fertigungsaufwand.

Durch die EP-PS 0 078 159 wird ein anderes Wirkungsprinzip vorgeschlagen. Hier weist das Schleifstück an seinem Fuß, d.h. an der dem Träger zugewandten Seite eine sich über die Länge des Schleifstücks erstreckende Nut auf, in der ein mit dem Druck eines Fluids beaufschlagter Behälter aus einem Gummi, der rohrförmig sein kann, untergebracht ist, der platzt, wenn er nicht mehr vollständig von dem ihn umgebenden Gehäuse aus den Nutwänden und der Oberseite des Trägers abgestützt ist. Der Behälter oder das Rohr ist auf einer Seite der Nut gasdicht verschlossen und stützt sich an der dortigen stirnseitigen Begrenzung der Nut ab. Auf der anderen Seite ist der Behälter oder das Rohr noch innerhalb des aus der Nut und dem Träger bestehenden Kanals gasdicht an ein druckfestes, nicht dehnbares Rohr, das vorzugsweise aus Metall besteht, gekoppelt. Dieses Rohr dient als Verbindungselement zu einem Fluiddrucküberwachungssystem der Stromabnehmeranordnung. Auch bei dieser Anordnung kann das Vorhandensein von Rissen, die Vorläufer größerer Schäden sind, nicht angezeigt werden. Es muß erst die Abstützung des eingelegten elastischen Behälters durch weitere Rißvergrößerung zu einem Spalt auf ein kritisches Maß gesenkt werden bis er platzt. Die Vergrößerung eines derartigen, ein Platzen des Behälters noch nicht auslösenden Defektes geschieht im allgemeinen allmählich. Mit dieser Anordnung werden deshalb Schäden nicht verzögerungsfrei gemeldet. Außerdem muß bei der Montage des dehnbaren Gummibehälters mit großer Sorgfalt vorgegangen werden, um ihn nicht bereits vor dem betrieblichen Einsatz zu schädigen und schließlich kann er nach der Beaufschlagung mit dem Betriebsdruck durch feine am Schleifstück oder am Träger befindliche Unebenheiten, Rauhigkeiten oder Fremdkörper unbrauchbar werden.

Den beschriebenen Nachteilen soll abgeholfen werden. Der Erfindung liegt daher die Aufgabe zugrunde, mit einfachen Mitteln eine mechanisch robuste Anordnung zu schaffen, die es ermöglicht, an Schleifstücken von Schleifbügeln sowohl kritische Verschleißraten als auch Fehler, wie Brüche oder feine Risse praktisch verzögerungsfrei zu melden.

Die Aufgabe wird durch die kennzeichnenden Merkmale des Patentanspruchs 1 gelöst, die hiermit als Bestandteile der Beschreibung eingeführt werden.

Das auf dem Schleifbügel befindliche Schleifstück hat auf seiner Fußseite eine Nut, die im Normalfall über die gesamte Länge des Schleifstückes verläuft. Die Nut kann jedoch auch im Abstand von einem oder beiden Enden der Schleifleiste angebracht sein. Sie muß sich aber mindestens über die gesamte vom Fahrleitungsdraht überstrichene Zone erstrecken. Die Nut kann verschiedene Querschnittsformen haben. Sie muß nur so ausgebildet sein, daß sie durch ein eingeschobenes und dann mit ihren zwei Seitenwänden verklebtes Profil so verschlossen werden kann, daß sich ein Kanal bildet. Für eine rationelle Herstellung und den betrieblichen Einsatz ist ein rechteckiger Querschnitt vorteilhaft.

Die die Nut umgebenden Wände werden mit einem Harz gasdicht abgedichtet. Dafür eignen sich alle Harze, die die Oberflächen der Nut vollständig benetzen und die deren Poren sicher verschließen. Zusätzlich müssen sie den beim Betrieb der Schleifbügel herrschenden Bedingungen, wie hohe Temperaturen bei der Stromübertragung, niedrige Temperaturen bei Betriebsstillständen im Winter, durch Temperaturgradienten verursachte Spannungen und Erschütterungen ohne nachteilige Veränderungen oder Ablösungen von ihrer Unterlage widerstehen. Für diesen Zweck verwendet man vorteilhaft Harze aus der Gruppe der Duroplaste, wie Polyesterharze, Epoxidharze, Methacrylatharze, Triazinharze, Polysiloxanharze, Melamin-, Harnstoff- und Phenol-Formaldehydharze. Besonders gut geeignet sind siliconmodifizierte Polyesterharze. Die bis jetzt verfügbaren Thermoplaste und Elaste sind wegen ihrer geringen Temperaturbeständigkeit, Versprödung und Neigung zu Ablösungen bei tiefen Temperaturen und teilweise schweren Verarbeitbarkeit weniger geeignet.

In die mit der gasdichten Präparation versehenen Nut wird ein auf einer Stirnseite verschlossenes und auf einer Längsseite offenes Profil, das genau in die Nut eingepaßt ist, mit einem Klebstoff, z.B. einem Duroplastkleber gasdicht eingeklebt. Es kann auch ein beidseitig offenes Profil eingeklebt werden und dann ein Ende des von dem Profil und der Nut gebildeten Kanals mit Hilfe eines passenden Einsatzes aus Kohlenstoff oder Metall unter Verwendung eines der genannten Duroplaste oder auch allein mit einem Duroplasten gasdicht verschlossen werden. Die Profile bestehen vorzugsweise aus Metall, wobei Messing und Kupfer wegen der Lötfähigkeit besonders vorteilhaft sind. Der bevorzugten rechteckigen Ausführungsform der Nut entsprechend hat das Profil vorteilhafterweise ebenfalls eine auf die Nutmaße abgestimmte rechteckige Querschnittsform, die häufig auch als U-Form bezeichnet wird. Es sind aber auch andere Profilformen verwendbar, z.B. solche mit konkavem oder konvexem Boden oder mit abgerundeten Kanten und Ecken. Mit letzteren kann speziellen Spannungszuständen in den Verklebungen Rechnung getragen werden. Es ist auch von Vorteil, wenn die äußere Seitenhöhe des Profileinsatzes etwa 1 mm kleiner als die Tiefe der Nut ist. Beim Einsetzen des Profils bis auf den Boden der Nut entsteht dadurch auf der Fußseite der Schleifleiste eine flache Vertiefung. Diese wird vollständig mit einer Kunstharzklebemasse ausgegossen oder durch ein sonst in der Technik übliches Verfahren, wie z.B. Spachteln, ausgefüllt und damit ein gasdichter Verschluß des aus dem Profil und der Nut entstandenen kanalförmigen Hohlraumes bewirkt. Hierfür besonders gut geeignete Klebemassen gehören ebenfalls zur Gruppe der Duroplaste oder zur Gruppe der Silicone. Diese Profilausführung gestattet außerdem die Zulassung größerer Fertigungstoleranzen.

Für die Schleifstücke dieser Art, die mit einem gebräuchlichen, mit einem Luftdruck von ca. 3 bar arbeitenden Überwachungssystemen gekoppelt werden sollen, muß der freie Querschnitt des von dem Profileinsatz und der Nut umschlossenen Hohlraumes mindestens 9 mm² betragen. Bei Vorliegen anderer Betriebsbedingungen ist die Wahl anderer, angepaßter Querschnitte möglich.

Die so beschaffene Schleifleiste wird nun in üblicher Weise, z.B. durch Kleben, Löten, Schrauben, Nieten oder Bördeln auf einem Trägerprofil, vorzugsweise aus Aluminium befestigt. Zum Anschluß an das Fluiddrucküberwachungssystem für die Schleifbügel des Pantographen wird in das offene Ende des von der Nut und dem eingeklebten Profil gebildeten Kanals unter Verwendung der im vorstehenden beschriebenen Klebemittel ein Metallrohr, vorzugsweise aus Messing oder Kupfer gasdicht eingeklebt. An seinem freien Ende hat dieses Rohr eine der üblichen Verbindungsmöglichkeiten zum Anschluß an Druckfluidleitungen, wie z.B. Schraubkupplungen.

Mit der beschriebenen Anordnung werden wie bei anderen derartigen Systemen kritische Raten des normalen, betriebsbedingten Verschleißes und grobe Brüche der Schleifleisten gemeldet. Darüber hinaus werden aber auch die Schleifleiste durchsetzende größere und feine Risse, die zu einem plötzlichen Ausfall des Schleifbügels führen können, erkannt. Ein weiterer Vorteil der erfindungsgemäßen Anordnung ist, daß Defekte verzögerungsfrei gemeldet werden, da hier nicht erst ein in der Schleifleiste untergebrachter Hilfskörper, wie z.B. ein Gummibehälter zerstört werden muß, sondern die überwachte Schleifleiste selbst an den kritischen Stellen die Begrenzung des Druckraumes ist.

Die Herstellung der Schleifbügel erfordert geringen Aufwand und kann nach rationellen Methoden der Serienfertigung durchgeführt werden: Alle für den Zusammenbau der Schleifstücke notwendigen Teile sind leicht herstellbar, ihr Zusammenbau geschieht unter Verwendung von Klebemitteln und Ausgleichsmassen durch einfaches Zusammenstecken, die Montage zum Schleifbügel erfolgt in bewährter, einfacher Weise und für den Anschluß an das Drucküberwachungssystem des Pantographen sind Verschraubungen vorgesehen. Die gegebenen konstruktiven Möglichkeiten lassen Raum für eine allen Betriebsfällen gerechte, robuste Ausführung der Komponenten und der gesamten Vorrichtung.

Die Erfindung wird anhand von Zeichnungen beispielhaft beschrieben.

Es zeigen:
- Fig. 1 -: Eine Seitenansicht des Schleifbügels.
- Fig. 2 -: Die Anordnung des Fluidkanals im Schleifbügel entsprechend einem Querschnitt entlang der Linie II - II in Figur 1.
- Fig. 3 -: Eine vergrößerte Darstellung der Anordnung und Ausführung des Druckkanals gemäß Einzelheit III in Figur 2.

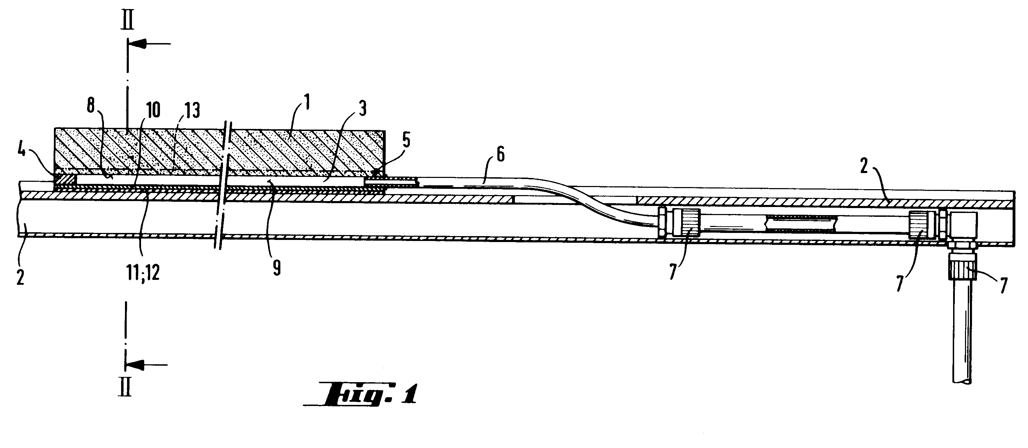

Figur 1 zeigt einen Schleifbügel, der aus einer Schleifleiste 1 aus Kohlenstoff, die in üblicher Weise auf einem Trägerprofil 2 aus Aluminium befestigt ist, besteht. An der dem Trägerprofil 2 zugewandten Seite der Schleifleiste 1 befindet sich ein gasdichter Kanal 3, der auf einer Seite mit einem eingeklebten Pfropfen 4 verschlossen und auf der anderen Seite durch ein bei 5 eingeklebtes Messingrohr 6 mit der nicht wiedergegebenen druckbetriebenen Überwachungseinrichtung des Pantographen über Schraubanschlüsse 7 verbunden ist.

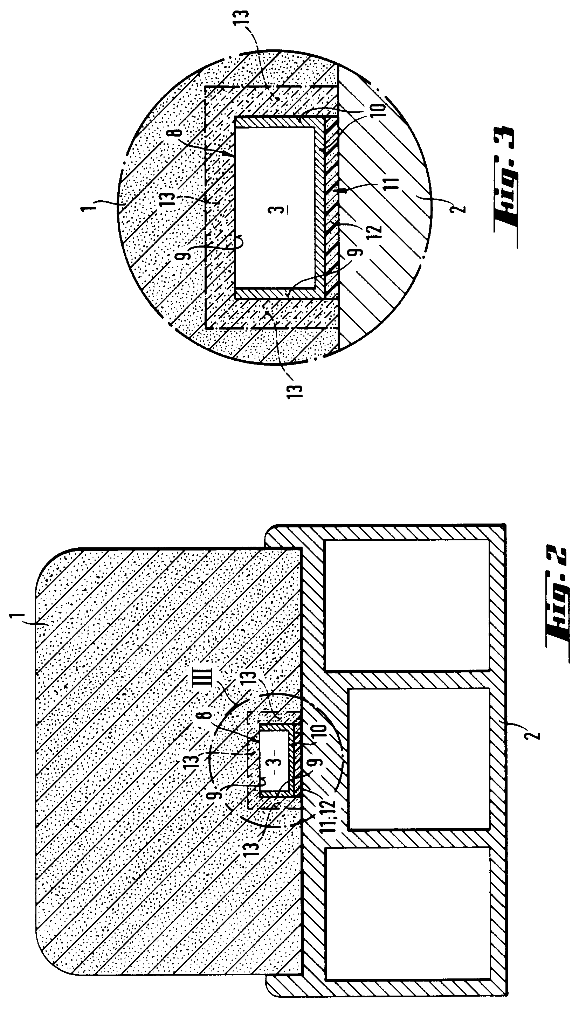

Der in Figur 2 wiedergegebene Querschnitt durch den Schleifbügel bei A - B in Figur 1 veranschaulicht die Lage des Druckkanals 3 im Schleifbügel.

Figur 3 offenbart in Verbindung mit Figur 2 den Aufbau des Kanals 3 und verdeutlicht die Art seiner Abdichtung gegenüber Fluiden im Detail. In der Schleifleiste 1 aus Kohlenstoff befindet sich eine Nut 8, deren Wände 9 durch Einstreichen und damit verbundenes Imprägnieren mit einem im Handel erhältlichen, siliconmodifizierten Polyesterharz 13 aus der Gruppe der Phthalate gasdicht gemacht worden sind. In diese Nut 8 ist ein Messingprofil 10 rechteckigen Querschnitts, dessen äußere Seitenhöhe ca. 1 mm kleiner als die Tiefe der Nut 8 ist, mit einem Polyesterkleber so eingeklebt, daß aus der Nut 8 und dem Profil 10 ein Kanal 3 entstanden ist und daß an der dem Träger 2 zugekehrten Seite der Schleifleiste 1 ein Raum 11 gebildet worden ist, der mit Abdichtungsmasse 12 aus siliconmodifiziertem Polyesterharz gefüllt ist. Die so vorbereitete Schleifleiste 1 ist auf ein Trägerprofil 2 aus Aluminium geklebt und wie unter den Ausführungen zu Figur 1 beschrieben, für einen Anschluß an die Überwachungseinrichtung des Pantographen ausgerüstet.

## Patentansprüche

1. Schleifbügel für Stromabnehmer elektrischer Fahrzeuge, dessen Betriebssicherheit durch Druckfluide überwachbar und der mit einem auf einem Träger (2) befestigten Schleifstück (1) aus Kohlenstoff ausgerüstet ist, das (1) auf der dem Träger (2) zugekehrten Seite über mindestens die vom Fahrleitungsdraht überstrichene Länge in Richtung seiner Längserstreckung eine Nut (8) aufweist, wobei
- die Oberflächen der Nut (8) mit einem Harz gasdicht abgedichtet sind,
- in die so vorbereitete Nut (8) ein metallisches, auf mindestens einer Längsseite offenes, zwischen die Wände der Nut (8) gerade passendes Profil (10) gasdicht so eingeklebt ist, daß die der offenen Längsseite des Profils (10) gegenüberliegende, geschlossene Längsseite dem Träger (2) zugewandt ist,
- der von dem Profil (10) und der Nut (8) gebildete Kanal (3) an einer Stirnseite des Profils (10) gasdicht verschlossen ist
- und am anderen, offenen Ende des von der Nut (8) und dem eingeklebten Profil (10) gebildeten Hohlraumes (3) ein Metallrohr (6) gasdicht eingeklebt ist, welches an seinem freien Ende eine Verbindungsmöglichkeit (7) zum Anschluß an das Fluiddrucküberwachungssystem des Fahrzeugs aufweist.

2. Schleifbügel nach Patentanspruch 1,
dadurch gekennzeichent, daß
der freie Querschnitt des durch die Nut (8) und das eingeklebte Profil (10) gebildeten Hohlraumes (3) mindestens 9 mm² beträgt.

3. Schleifbügel nach Patentanspruch 1 oder 2,
dadurch gekennzeichnet, daß
die im Schleifstück (1) befindliche Nut (8) und das eingeklebte Profil (10) rechteckige Querschnitte aufaufweisen.

4. Schleifbügel nach Patentanspruch 1, 2 oder 3
dadurch gekennzeichnet, daß
die äußere Seitenhöhe des eingeklebten Profils (10) 1 mm kleiner als die Tiefe der Nut (8) im Schleifstück (1) ist.

5. Schleifbügel nach den Patentansprüchen 1, 2, 3 oder 4,
dadurch gekennzeichnet, daß
das in die Nut (8) eingeklebte Profil (10) aus einem lötbaren Metall besteht.

6. Schleifbügel nach den Patentansprüchen 1, 2, 3, 4 oder 5,
dadurch gekennzeichnet, daß
das zum Herstellen der Gasdichtigkeit des durch die Nut (8) und das eingeklebte Profil (10) gebildeten Hohlraumes (3) verwendete Harz ein Harz aus der Gruppe der Duroplaste ist.

7. Schleifbügel nach Patentanspruch 6,
dadurch gekennzeichnet, daß
das Harz ein Harz aus der Gruppe der siliconmodifizierten Polyesterharze ist.

## Claims

1. Sliding contact shoe for current collectors of electric vehicles, the operating reliability of which is able to be monitored by pressure fluids and which shoe is equipped with a carbon pantograph slipper (1), secured to a carrier (2), which slipper (1) has a groove (8), on the side facing the carrier (2) over at least the length in the longitudinal direction of the slipper, which is covered by the contact line wire, wherein
- the surfaces of the groove (8) are sealed in a gas-tight manner with a resin,
- a metallic profile (10) open at least on one longitudinal side, just fitting between the walls of the groove (8) such that the closed longitudinal side opposite the open longitudinal side of the profile (10) is facing the carrier (2), is glued in a gas-tight manner into the groove (8) thus prepared,
- the channel (3) formed by the profile (10) and the groove (8) is sealed at one face of the profile (10) in a gas-tight manner,
- and a metal tube (6) is glued in a gas-tight manner at the other open side of the hollow space (3) formed by the groove (8) and by the glued-in profile (10), which tube has a connecting facility (7) on its free end, for connection to the fluid pressure monitoring system of the vehicle.

2. Sliding contact shoe according to claim 1, characterised in that the free cross-section of the hollow space (3) formed by the groove (8) and the glued-in profile (10) is at least 9 mm².

3. Sliding contact shoe according to claim 1 or 2, characterised in that the groove (8) located in the pantograph slipper (1) and the glued-in profile (10) have rectangular cross-sections.

4. Sliding contact shoe according to claim 1,2 or 3, characterised in that the outer side height of the glued-in profile (10) is 1 mm smaller than the depth of the groove (8) in the pantograph slipper (1).

5. Sliding contact shoe according to claims 1,2,3 or 4, characterised in that the profile (10) glued into the groove (8) consists of a solderable metal.

6. Sliding contact shoe according to claims 1,2,3,4 or 5, characterised in that the resin used for producing the gas-tightness of the hollow space (3) formed by the groove (8) and the glued-in profile (10) is a resin of the thermosetting plastics.

7. Sliding contact shoe according to claim 6, characterised in that the resin is a resin from the group of silicon-modified polyester resins.

## Revendications

1. Balai frotteur pour un dispositif de prise de courant de véhicules électriques, dont la sécurité de fonctionnement peut être contrôlée par des fluides sous pression et qui est équipé d'un frotteur (1) en carbone fixé sur un support (2), frotteur (1) qui comporte sur la face tournée vers le support (2) une rainure (8) dans le sens de son développement longitudinal sur au moins la longueur balayée par le fil de la ligne de contact, dans lequel:
- les surfaces de la rainure (8) sont rendues étanches aux gaz par une résine,
- un profilé (10) métallique, s'adaptant de manière très exacte entre les parois de la rainure (8), ouvert sur au moins une face longitudinale est introduit et collé dans ta rainure (8) ainsi préparée auparavant, de sorte que la face longitudinale fermée, opposée à la face longitudinale ouverte du profité (10) soit tournée vers le support,
- le canal (3) formé par le profit (10) et la rainure (8) est fermé avec étanchéité pour les gaz sur une face frontale du profilé (10),
- un tube métallique (6) est inséré et collé avec étanchéité pour les gaz à l'autre extrémité ouverte de t'espace vide formé par ta rainure (8) et te profité (10) inséré et collé, tube (6) qui comporte à son extrémité libre une possibilité de jonction (7) pour le raccordement au système de contrôle par fluide sous pression.

2. Balai frotteur selon la revendication 1, caractérisé en ce que la section transversale libre de l'espace vide (3) formé par la rainure (8) et le profilé (10) introduit et collé est d'au moins 9 mm².

3. Balai frotteur selon les revendications 1 ou 2, caractérisé en ce que la rainure (8) se trouvant dans le frotteur (1) et le profilé (10) introduit et collé comportent des sections transversales rectangulaires.

4. Balai frotteur selon les revendications 1, 2 ou 3, caractérisé en ce que la hauteur des côtés extérieurs du profité (10) introduit et collé est inférieure de 1 mm à la profondeur de la rainure (8) dans le frotteur (1).

5. Balai frotteur selon les revendications 1, 2, 3 ou 4, caractérisé en ce que le profité (10) introduit et collé dans la rainure (8) est composé d'un métal pouvant être brasé.

6. Balai frotteur selon les revendications 1, 2, 3, 4 ou 5, caractérisé en ce que ta résine utilisée pour ta préparation de t'étanchéité aux gaz de l'espace creux (3) formé par la rainure (8) et le profité introduit et collé (10) est une résine du groupe des résines thermodurcissables.

7. Balai frotteur selon la revendication 6, caractérisé en ce que la résine est une résine du groupe des résines polyester modifiées au silicone.
